# FASCICULE DE BREVET EUROPEEN

(11) **EP 3 888 217 B1**
(45) Date de publication et mention de la délivrance du brevet: **12.10.2022**
(21) Numéro de dépôt: 19824369.3
(22) Date de dépôt: 23.12.2019
(51) Int. Cl.: H02J 3/06, H02J 1/08, H02J 3/36

(54) **SYSTÈME INTÉGRANT UNE SOLUTION DE RECONFIGURATION DE CONNEXION D'UN DISPOSITIF DE CONTRÔLE DE FLUX DE PUISSANCE DANS UN RÉSEAU MAILLÉ**
SYSTEM MIT EINER LÖSUNG ZUR REKONFIGURATION DES ANSCHLUSSES EINES LEISTUNGSFLUSSREGLERS IN EINEM VERMASCHTEN NETZWERK
SYSTEM COMPRISING A SOLUTION TO RECONFIGURE THE CONNECTION OF A POWER FLOW CONTROLLER IN A MESHED NETWORK

(30) Priorité: 28.12.2018 FR 1874285
(43) Date de publication de la demande: 06.10.2021
(73) Titulaire: Supergrid Institute, 69100 Villeurbanne (FR); Ecole Centrale de Lyon, 69130 Ecully (FR); Centre national de la recherche scientifique, 75016 Paris (FR); Université Claude Bernard Lyon 1, 69100 Villeurbanne (FR); Institut National des Sciences Appliquees de Lyon (Insa Lyon), 69100 Villeurbanne (FR)
(72) Inventeur: MOREL, Florent, 69007 LYON (FR); TOURE, Sellé, 69007 LYON (FR); GHAZALY, Laila, 69007 LYON (FR); POULLAIN, Serge, 69007 LYON (FR); LUSCAN, Bruno, 69007 LYON (FR)
(74) Mandataire: Opilex
(86) Numéro de dépôt international: PCT/EP2019/086961
(87) Numéro de publication internationale: WO 2020/136179

(56) Documents cités:
- EP-A1- 2 975 723
- EP-A1- 3 018 786
- DIAB HATEM ET AL: "A current flow control apparatus for meshed multi-terminal DC grids", 2016 19TH INTERNATIONAL SYMPOSIUM ON ELECTRICAL APPARATUS AND TECHNOLOGIES (SIELA), IEEE, 29 mai 2016 (2016-05-29), pages 1-4, XP032944949, DOI: 10.1109/SIELA.2016.7542984 [extrait le 2016-08-12]
- R.S. Whitehouse ET AL: "A current flow controller for use in HVDC grids", 10th IET International Conference on AC and DC Power Transmission (ACDC 2012), 1 janvier 2012 (2012-01-01), pages 1-5, XP055178226, DOI: 10.1049/cp.2012.1973 ISBN: 978-1-84-919700-7

## Description

### Domaine technique de l'invention

La présente invention se rapporte à un système qui comporte un dispositif de contrôle de flux de puissance utilisé pour contrôler la répartition des courants dans un réseau maillé et une solution de reconfiguration dudit dispositif dans le réseau selon l'état de fonctionnement du réseau.

### Etat de la technique

Un réseau est un ensemble de lignes aériennes ou de câbles appelés par la suite « liaisons » qui connectent entre elles des dispositifs (ou terminaux) afin qu'ils échangent de l'énergie. Dans un réseau à courant continu, les dispositifs qui fournissent ou consomment de l'énergie sont généralement des convertisseurs électroniques de puissance nommés "stations de conversion".

Si le réseau est maillé, le courant dispose de plusieurs chemins possibles pour aller d'une station de conversion à une autre. Les courants dans les liaisons se répartissent en fonction des caractéristiques des liaisons (en courant continu, cette caractéristique est la résistance de la liaison).

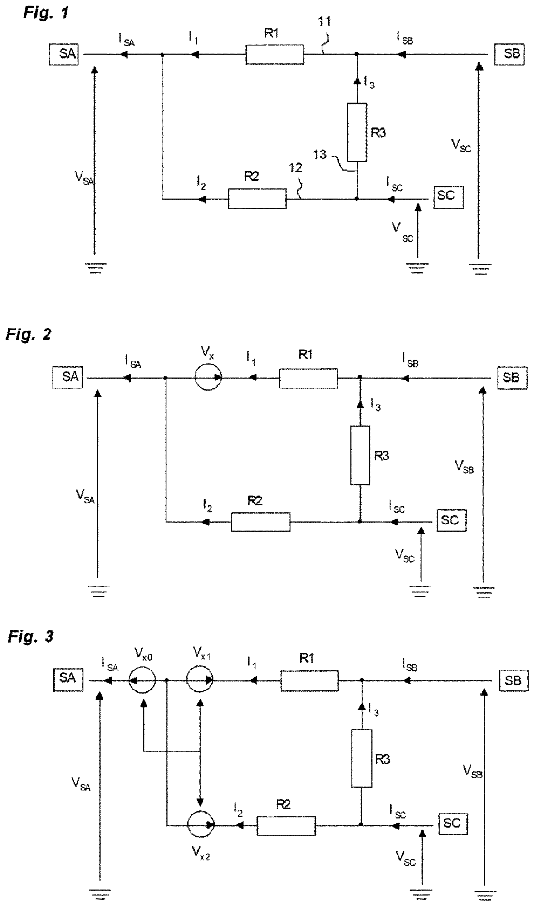

La figure 1 représente un réseau maillé doté d'une seule maille. Ce réseau comporte ainsi trois nœuds qui sont chacun à une tension déterminée et trois liaisons, dites première liaison 11 reliant le premier nœud au deuxième nœud, deuxième liaison 12 reliant le premier nœud au troisième nœud et troisième liaison 13 reliant le deuxième nœud au troisième nœud.

Par exemple, sur le réseau représenté sur la figure 1, les trois tensions V_{SA}, V_{SB}, V_{SC} représentent les tensions imposées par des stations de conversions. Les trois résistances R1, R2, R3 représentent les résistances des liaisons.

Chaque station de conversion est apte à injecter ou extraire une puissance du réseau. Dans cette configuration, les courants dans chaque liaison I₁, I₂, I₃ ne sont pas contrôlés par les stations de conversion. En effet, chaque station de conversion impose au réseau, au nœud où elle est connectée, une tension déterminée et/ou le courant qui la traverse I_{SA}, I_{SB}, I_{SC}. Il est possible d'atteindre des points de fonctionnement pour lesquels une liaison est traversée par un courant supérieur à son courant maximal alors que d'autres liaisons dans le réseau (qui pourraient être utilisées pour transférer l'énergie) sont en sous-charge.

Dans une architecture telle que représentée sur la figure 1, dans le cas où les stations de conversion SB et SC fournissent de l'énergie au réseau et la station de conversion SA reçoit de l'énergie, le courant dispose de deux chemins possibles pour aller de la station SB à la station SA :
- Il peut passer directement par la première liaison 11 ou,
- Il peut passer par les deux liaisons 13 et 12.

La répartition entre les deux chemins sera notamment déterminée en fonction des valeurs des résistances des liaisons et des tensions imposées par les stations de conversion du réseau.

Pour assurer une meilleure répartition du courant dans les liaisons d'un réseau maillé, il a été proposé dans l'état de la technique d'insérer dans la maille un dispositif de contrôle de flux de puissance (appelé également PFC pour "Power Flow Controller"). Certains de ces dispositifs utilisent une seule source de tension mise en série avec une liaison comme schématisé sur la figure 2. Le réglage de cette tension permet de modifier la répartition des courants dans le réseau. Des architectures de ce type ont été décrites dans les demandes de brevet WO2010/115452A1, WO2013/013858A1, EP3018786A1 et EP2975723A1.

Des dispositifs de contrôle de flux de puissance qui ajoutent une source de tension en série avec deux liaisons en alternance ont également été décrits dans les demandes EP3007301A1 et EP3007300A1.

Un autre dispositif de contrôle de flux de puissance décrit dans la demande de brevet WO2013/178807A1 (ou son correspondant US2015/180231A1**),** dont le principe général est présenté à la figure 3 consiste pour sa part à insérer deux sources de tension en série chacune avec une liaison distincte et une source de tension en série avec une station de conversion.

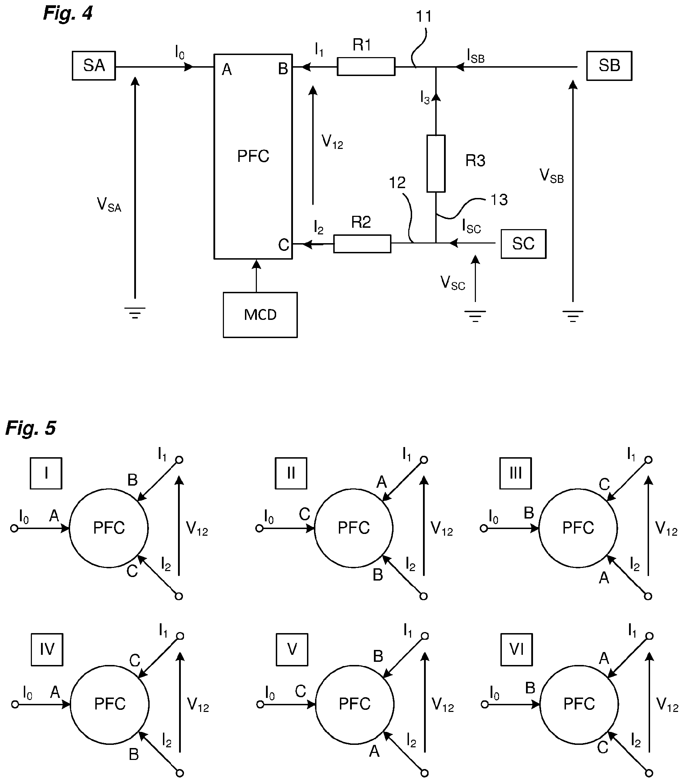

De manière générale, un tel dispositif de contrôle de flux de puissance est inséré dans la maille et forme un nœud entre trois liaisons du réseau comme montré sur la figure 4. Un tel dispositif peut comporter :
- Une première borne A destinée à être connectée à une première liaison, une deuxième borne B destinée à être connectée à une deuxième liaison et une troisième borne C destinée à être connectée à une troisième liaison ;
- Au moins une source de tension ;
- Des moyens de commutation ;
- Des moyens de commande desdits moyens de commutation configurés pour contrôler le flux de puissance et la répartition des courants dans la maille.

En considérant qu'un premier courant I₀ circule sur la première liaison, qu'un deuxième courant I₁ circule sur la deuxième liaison, qu'un troisième courant I₂ circule sur la troisième liaison et qu'une tension V₁₂ est présente entre deux des liaisons, on dénombre douze états de fonctionnement possibles du réseau pour lesquels le dispositif PFC pourrait être utilisés. Ces douze états de fonctionnement tiennent compte du signe du premier courant I₀, du signe du deuxième courant I₁, du signe du troisième courant I₂ et du signe de la tension V₁₂.

Ces douze états de fonctionnement sont ainsi répertoriés dans le tableau ci-dessous :

| **N° état de fonctionnement** | **I₀** | **I₁** | **I₂** | **V₁₂** |
|---|---|---|---|---|
| **1** | + | + | - | + |
| **2** | + | + | - | - |
| **3** | + | - | + | + |
| **4** | + | - | + | - |
| **5** | + | - | - | + |
| **6** | + | - | - | - |
| **7** | - | - | + | + |
| **8** | - | - | + | - |
| **9** | - | + | - | + |
| **10** | - | + | - | - |
| **11** | - | + | + | + |
| **12** | - | + | + | - |

Il s'avère que la plupart des dispositifs de contrôle de flux de puissance connus dans l'état de la technique présente une configuration intrinsèque qui leur permet de ne répondre qu'à certains de ces douze états de fonctionnement et non pas à tous ces états de fonctionnement. Certains de ces dispositifs ne sont en effet pas réversibles en courant et/ou en tension, ou même pas réversibles du tout, ce qui limite leur étendue de fonctionnement.

Le but de l'invention est donc de permettre à un dispositif de contrôle de flux de puissance, qui ne dispose pas intrinsèquement de caractéristiques de réversibilité suffisantes, d'étendre ses capacités pour répondre à un plus grand nombre d'états de fonctionnement parmi ceux listés ci-dessus, voir même tous ces états de fonctionnement.

### Exposé de l'invention

Ce but est atteint par un système destiné à être employé dans un réseau maillé comportant au moins une maille présentant au moins un nœud entre une première liaison, une deuxième liaison et une troisième liaison, ledit réseau étant susceptible de fonctionner suivant un nombre N₁ d'états de fonctionnement, chaque état de fonctionnement du réseau étant défini à partir du signe du courant électrique présent dans la première liaison, du signe du courant électrique présent dans la deuxième liaison, du signe du courant électrique présent dans la troisième liaison et d'une tension présente entre deux des liaisons de la maille, ledit système comportant :
- Un dispositif de contrôle de flux de puissance destiné à être inséré dans ledit nœud de la maille et qui comporte une première borne, une deuxième borne et une troisième borne, ledit dispositif comportant au moins une source de tension commandée connectée entre deux de ses bornes, ladite source de tension commandée du dispositif de contrôle de flux de puissance présentant une topologie intrinsèque agencée pour répondre à un nombre N0 d'états de fonctionnement du réseau, N₀ étant supérieur ou égal à 1 et inférieur à N₁,
- Une première borne destinée à être connectée à la première liaison desdites liaisons de la maille, une deuxième borne destinée à être connectée à la deuxième liaison desdites liaisons de la maille et une troisième borne destinée à être connectée à la troisième liaison desdites liaisons de la maille,
- Une interface de commutation intercalée entre lesdites bornes du système et lesdites bornes du dispositif, ladite interface de commutation comportant un nombre M d'interrupteurs, M étant supérieur ou égal à quatre et choisi en tenant compte de la valeur dudit nombre N₀ et dudit nombre N₁,
- Une unité de commande configurée pour commander les M interrupteurs de ladite interface de commutation en vue de connecter chaque borne dudit dispositif de contrôle de flux de puissance à une borne distincte du système et de répondre à un état de fonctionnement du réseau.

Selon une particularité, l'interface de commutation peut par exemple comporter neuf interrupteurs, répartis en trois groupes de trois, un premier groupe de trois interrupteurs qui comporte :
- un premier interrupteur connecté en série sur une liaison reliant la première borne du système à la première borne du dispositif de contrôle de flux de puissance,
- un deuxième interrupteur connecté en série sur une liaison reliant la première borne du système à la deuxième borne du dispositif de contrôle de flux de puissance, et
- un troisième interrupteur connecté en série sur une liaison reliant la première borne du système à la troisième borne du dispositif de contrôle de flux de puissance,
un deuxième groupe de trois interrupteurs qui comporte :
- un premier interrupteur connecté en série sur une liaison reliant la deuxième borne du système à la première borne du dispositif de contrôle de flux de puissance,
- un deuxième interrupteur connecté en série sur une liaison reliant la deuxième borne du système à la deuxième borne du dispositif de contrôle de flux de puissance, et
- un troisième interrupteur connecté en série sur une liaison reliant la deuxième borne du système à la troisième borne du dispositif de contrôle de flux de puissance,
un troisième groupe de trois interrupteurs qui comporte :
- un premier interrupteur connecté en série sur une liaison reliant la troisième borne du système à la première borne du dispositif de contrôle de flux de puissance,
- un deuxième interrupteur connecté en série sur une liaison reliant la troisième borne du système à la deuxième borne du dispositif de contrôle de flux de puissance, et
- un troisième interrupteur connecté en série sur une liaison reliant la troisième borne du système à la troisième borne du dispositif de contrôle de flux de puissance.

Selon une particularité, l'interface de commutation est configurée et agencée pour permettre au dispositif de contrôle de flux de puissance de se connecter aux trois bornes du système selon au moins deux configurations de connexion distinctes, une configuration de connexion étant définie par la connexion directe de chaque borne du système à une seule borne du dispositif.

Selon une autre particularité, l'interface de commutation est configurée et agencée pour permettre au dispositif de contrôle de flux de puissance de se connecter aux trois bornes du système selon au plus six configurations de connexion distinctes.

Selon une autre particularité, le dispositif de contrôle de flux de puissance comporte un ensemble de commutation dans lequel tous les interrupteurs sont de type électronique.

Selon une autre particularité, les interrupteurs de l'interface de commutation sont tous de type mécanique ou électromécanique.

Selon une autre particularité, le réseau est susceptible de fonctionner selon un nombre Nₘₐₓ d'états de fonctionnement égal à douze.

L'invention concerne également un procédé de commande d'un système tel que défini ci-dessus, afin de réaliser une reconfiguration du dispositif de contrôle de flux de puissance pour le faire passer d'une configuration de connexion initiale permettant de répondre à un premier état de fonctionnement du réseau à une configuration de connexion finale différente en vue de répondre à un deuxième état de fonctionnement du réseau, une configuration de connexion étant définie par la connexion directe de chaque borne du système à une seule borne du dispositif, ledit procédé comportant les étapes suivantes :
- Application d'un premier rapport cyclique au dispositif de contrôle de flux de puissance en vue d'annuler la tension d'au moins une de ses sources de tension,
- Fermeture des interrupteurs de l'interface de commutation, permettant d'établir la configuration de connexion finale,
- Application d'un deuxième rapport cyclique au dispositif de contrôle de flux de puissance en vue d'annuler la tension d'au moins une de ses sources de tension,
- Ouverture des interrupteurs de l'interface de commutation, correspondant à la configuration de connexion initiale,
- Application d'un troisième rapport cyclique au dispositif de contrôle de flux de puissance en vue d'obtenir la répartition des courants désirée dans la maille.

Selon une particularité, lors de la première étape d'application du rapport cyclique, celui-ci est fixé égal à 0 ou à 1 selon le premier état de fonctionnement du réseau.

Selon une autre particularité, lors de la deuxième étape d'application du rapport cyclique, celui-ci est fixé égal à 0 ou à 1 selon le deuxième état de fonctionnement final du réseau.

### Brève description des figures

D'autres caractéristiques et avantages vont apparaître dans la description détaillée qui suit faite en regard des dessins annexés dans lesquels :
- La figure 1 représente un réseau maillé minimal à une seule maille.
- Les figures 2 et 3 illustrent le principe de fonctionnement d'un dispositif PFC inséré dans une maille.
- La figure 4 représente de manière schématique et générale un dispositif PFC incorporé dans la maille du réseau.
- La figure 5 illustre de manière schématique les six manières d'insérer un dispositif PFC dans un nœud du réseau maillé.
- La figure 6 représente de manière schématique une architecture générale du système de l'invention.
- La figure 7 représente un exemple d'architecture du système de l'invention, permettant de gérer les douze états de fonctionnement du réseau dans lequel est inséré le dispositif PFC.
- Les figures 8 et 9 représentent deux topologies différentes de dispositif PFC sur lesquelles est appliquée une interface de commutation du système de l'invention.
- La figure 10 représente l'architecture générale d'un dispositif PFC pouvant être employé dans le système de l'invention.
- La figure 11 représente une autre topologie de dispositif PFC sur laquelle est appliquée une interface de commutation du système de l'invention.
- La figure 12 représente une autre topologie de dispositif PFC sur laquelle est appliquée une interface de commutation du système de l'invention.
- Les figures 13A à 13C illustrent le principe d'une reconfiguration d'un dispositif PFC tel que celui représenté sur la figure 9.
- Les figures 14A et 14B illustrent le principe d'une autre reconfiguration du dispositif PFC de la figure 9.
- Les figures 15A et 15B illustrent le principe d'une reconfiguration d'un dispositif PFC tel que celui représenté sur la figure 11.

### Description détaillée d'au moins un mode de réalisation

Un dispositif de contrôle de flux de puissance de l'invention (également appelé dispositif PFC pour "Power Flow Controller") est destiné à être employé dans un réseau maillé, préférentiellement haute tension, à courant continu. Ce sera le cas lorsque les moyens de commutation du dispositif PFC comportent des interrupteurs de puissance réversibles en courant et en tension.

Comme déjà évoqué ci-dessus en liaison avec la figure 1, un réseau maillé se présente, de la manière la plus simple, sous la forme de trois nœuds interconnectés.

Chaque nœud est avantageusement connecté directement ou indirectement à une ou plusieurs stations de conversion. La station de conversion SA est ainsi connectée au premier nœud. La station de conversion SB est ainsi connectée au deuxième nœud du réseau. La station de conversion SC est ainsi connectée au troisième nœud du réseau.

Chaque station de conversion est destinée à injecter une puissance sur le réseau ou extraire une puissance du réseau.

Chaque station de conversion est destinée à injecter un courant sur le réseau ou extraire un courant du réseau maillé. Sur la figure 1, il s'agit du courant I_{SA} pour la station de conversion A, du courant I_{SB} pour la station de conversion B et du courant I_{SC} pour la station de conversion C.

Une tension est imposée sur chaque nœud par la station connectée sur le nœud. La tension Vₐ est appliquée au premier nœud du réseau. La tension V_{b} est appliquée au deuxième nœud du réseau. La tension V_{c} est appliquée au troisième nœud du réseau.

Une première liaison 11 relie le premier nœud au deuxième nœud. Une deuxième liaison 12 relie le premier nœud au troisième nœud. Une troisième liaison 13 relie le deuxième nœud au troisième nœud.

Chaque liaison pourra être formée d'une ligne aérienne, d'un câble ou de toute autre solution permettant de transporter du courant.

Les courants dans chaque liaison (I₁, I₂, I₃) ne sont pas contrôlés par les stations de conversion. Il est donc possible d'atteindre des points de fonctionnement pour lesquels une liaison est traversée par un courant supérieur à son courant maximal. Il résulte de ce type de fonctionnement une limitation de l'ensemble des points de fonctionnement possibles du réseau et une sous-utilisation de certaines liaisons.

Comme déjà décrit ci-dessus, dans une configuration où les stations SB et SC fournissent de l'énergie sur le réseau maillé et où la station SA reçoit cette énergie, les courants I_{SB} et I_{SC} peuvent disposer de deux chemins pour rejoindre la station SA. Sur la figure 1, on ainsi trois courants I₁, I₂ et I₃ circulant respectivement sur chaque liaison 11, 12, 13 de la maille du réseau.

Pour exploiter au mieux un tel réseau maillé, il est donc connu d'insérer un dispositif de contrôle de flux de puissance (désigné ci-après dispositif PFC pour "Power Flow Controller") au niveau d'un nœud de la maille. Ce dispositif est commandé pour insérer au moins une tension en série avec une liaison du réseau afin de mieux répartir les courants dans la maille.

La figure 2 illustre le principe de fonctionnement d'un dispositif PFC simple, consistant en l'ajout d'une source de tension Vₓ en série avec la première liaison 11 de la maille. Le réglage de cette tension permet ainsi de modifier la répartition des courants dans le réseau. Différentes architectures de ce type ont été décrites dans les demandes de brevet WO2010/115452A1, WO2013/013858A1.

Des convertisseurs qui ajoutent une source de tension en série avec deux liaisons en alternance ont également été décrits dans les demandes EP3007301A1 et EP3007300A1.

Une autre solution décrite dans la demande de brevet WO2013/178807A1 et schématisée sur la figure 3 consiste à insérer deux sources de tension (Vₓ₁, Vₓ₂) en série chacune avec une liaison distincte et une source de tension (Vₓ₀) en série avec une station de conversion. Sur cette figure, les double-flèches symbolisent la capacité d'échange d'énergie entre les sources.

De manière générale, un dispositif PFC est donc destiné à permettre d'ajouter au moins une source de tension en série avec l'une des trois liaisons de la maille pour mieux répartir les courants dans la maille. Des améliorations sont ensuite possibles pour optimiser son fonctionnement et son dimensionnement.

La figure 4 représente ainsi de manière schématique et générale un dispositif PFC employé dans un réseau maillé, inséré dans une maille du réseau et formant un nœud entre trois liaisons de la maille. De manière non limitative, le dispositif est inséré dans le nœud présent entre la première liaison 11, la deuxième liaison 12 et la liaison menant vers la station SA.

De manière générale, on considèrera qu'un tel dispositif PFC comporte au moins :
- Une première borne A destinée à être connectée à la première liaison sur laquelle circule un courant référencé I₀, une deuxième borne B destinée à être connectée à la deuxième liaison sur laquelle circule le courant I₁ et une troisième borne C destinée à être connectée à une troisième liaison du réseau sur laquelle circule le courant I₂ ;
- Au moins une source de tension insérée dans la maille ;
- Un ensemble de commutation ;
- Des moyens de commande MCD de l'ensemble de commutation configurés pour contrôler les flux de puissance et la répartition des courants dans la maille.

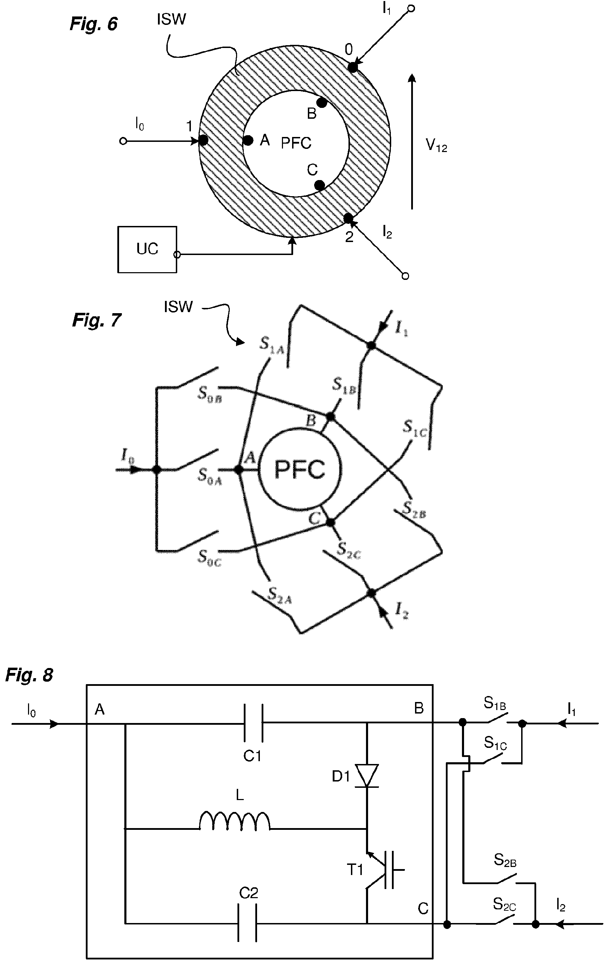

Certaines topologies particulières de dispositif PFC seront décrites ci-dessous en liaison avec les figures 8 à 11.

Selon sa topologie, le dispositif PFC employé pourra disposer de plus ou moins de capacités de "réversibilités". Par capacité de réversibilités, on entend ici la capacité à fonctionner avec des courants de lignes de signes différents et/ou en insérant des tensions de signes différents.

Ainsi, en considérant un dispositif PFC tel que défini ci-dessus et représenté sur la figure 4 (représenté par ses trois bornes A, B, C, sans tenir compte de sa constitution interne exacte et donc de ses capacités de réversibilité), selon le signe du courant I₀, le signe du courant I₁ et le signe du courant I₂ qui le traversent, et selon le signe de la tension V₁₂, on distingue douze états de fonctionnement auxquels le dispositif PFC pourrait être en mesure de répondre. Cependant, un dispositif PFC qui n'est pas réversible en tension et/ou en courant, ou non réversible du tout, ne pourra satisfaire que quelques-uns de ces douze états de fonctionnement. Ces douze états de fonctionnement sont listés dans le tableau ci-dessous :

| **N° Etat de fonctionnement du réseau** | **I₀** | **I₁** | **I₂** | **V₁₂** |
|---|---|---|---|---|
| **1** | + | + | - | + |
| **2** | + | + | - | - |
| **3** | + | - | + | + |
| **4** | + | - | + | - |
| **5** | + | - | - | + |
| **6** | + | - | - | - |
| **7** | - | - | + | + |
| **8** | - | - | + | - |
| **9** | - | + | - | + |
| **10** | - | + | - | - |
| **11** | - | + | + | + |
| **12** | - | + | + | - |

L'idée directrice est d'utiliser un dispositif PFC disposant d'une topologie simple (c'est-à-dire disposant de peu de capacités de réversibilité), lui permettant de ne répondre qu'à un nombre limité des états de fonctionnement listés ci-dessus, et de proposer une solution pour l'insérer de différentes manières dans le réseau afin de satisfaire un nombre d'états de fonctionnement plus élevé.

En référence à la figure 5, si on considère que le dispositif PFC dispose de trois bornes A, B, C et qu'il est inséré dans le nœud entre trois liaisons pour recevoir trois courants différents référencés I₀, I₁, I₂, il existe six manières ou configurations (I, II,..., VI) d'insérer le dispositif PFC dans le nœud. Selon la configuration de connexion dans laquelle le dispositif PFC est placé, chacun des courants I₀, I₁, I₂ pourra être aiguillé vers la borne A et devenir égal au courant I_{A}, vers la borne B et devenir égal au courant I_{B} ou vers la borne C et devenir égal au courant I_{C} et la tension V₁₂ pourra être appliquée entre les bornes B et C et devenir égale à V_{BC}, entre les bornes A et B et devenir égale V_{AB}, entre les bornes C et A et devenir égale V_{CA}, entre les bornes C et B et devenir égale à V_{CB}, entre les bornes B et A et devenir égale à V_{BA} ou entre les bornes A et C et devenir égale à V_{AC}. Ces six configurations de connexion sont résumées dans le tableau suivant :

| **N° de configuration de connexion** | **I₀** | **I₁** | **I₂** | **V₁₂** |
|---|---|---|---|---|
| **I** | I_{A} | I_{B} | I_{C} | V_{BC} |
| **II** | I_{C} | I_{A} | I_{B} | V_{AB} |
| **III** | I_{B} | I_{C} | I_{A} | V_{CA} |
| **IV** | I_{A} | I_{C} | I_{B} | V_{CB} |
| **V** | I_{C} | I_{B} | I_{A} | V_{BA} |
| **VI** | I_{B} | I_{A} | I_{C} | V_{AC} |

Comme déjà indiqué ci-dessus, selon sa topologie, par défaut de réversibilité en courant et/ou en tension, le dispositif PFC et en particulier sa ou ses sources de tension commandée(s) ne permettent de gérer intrinsèquement que certains des douze états de fonctionnement.

L'invention vise donc à permettre d'étendre la capacité de fonctionnement d'un dispositif PFC pour que le système global devienne ainsi capable de gérer un nombre supérieur d'états de fonctionnement.

Pour cela, le système intègre, en plus du dispositif PFC, une interface de commutation spécifique, référencée ISW sur les figures annexées. Cette interface de commutation ISW comporte plusieurs interrupteurs commandables. Ces interrupteurs sont avantageusement de type mécanique ou électromécanique. Ces interrupteurs peuvent aussi être de type électronique, réalisés sous forme de transistors. De manière non limitative, il pourra s'agir de contacteurs. Il faut noter que les interrupteurs employés dans le dispositif PFC seront pour leur part, la plupart du temps, de type électronique, réalisés sous la forme de transistors.

La figure 6 montre ainsi un schéma général du système conforme à l'invention. Sur cette figure, le système comporte ainsi trois bornes 0, 1, 2, un dispositif PFC qui comporte ses trois bornes A, B, C et l'interface de commutation ISW intercalée entre les trois bornes 0, 1, 2 du système et les trois bornes A, B, C du dispositif PFC. La borne 0 reçoit le courant I₀, la borne 1 reçoit le courant I₁ et la borne 2 reçoit le courant I₂. L'interface de commutation ISW comporte plusieurs interrupteurs agencés de manière adaptée pour permettre au système de fonctionner suivant des états de fonctionnement supplémentaires non possibles via la topologie intrinsèque du dispositif PFC.

Autrement dit, on a la situation suivante :
- Le réseau est susceptible de fonctionner selon un nombre Nₘₐₓ d'états de fonctionnement, Nₘₐₓ étant égale à douze ;
- Le dispositif PFC présente une topologie qui lui permet de répondre à un nombre N₀ d'états de fonctionnement, N₀ étant supérieur ou égal à 1 et strictement inférieur à Nₘₐₓ ;
- L'interface de commutation ISW ajoutée, via des commandes adaptées, va permettre au système global incluant le dispositif PFC de répondre à un nombre N₁ d'états de fonctionnement qui est supérieur à N₀ et qui pourra même être égal à Nₘₐₓ.

Bien entendu, il faut comprendre que le système intègre des moyens de commande adaptés, tels qu'une unité de commande UC (figure 6) comprenant au moins un microprocesseur et des moyens de mémorisation. Cette unité de commande UC peut intégrer les moyens de commande MCD du dispositif PFC et est configurée pour commander l'interface de commutation ISW.

L'unité de commande UC est configurée pour commander les interrupteurs de l'interface de commutation ISW de manière adaptée pour insérer le dispositif PFC dans le réseau selon l'état de fonctionnement voulu. En commandant les interrupteurs de l'interface de commutation ISW de manière adaptée, l'unité de commande UC permet de connecter chaque borne A, B, C du dispositif PFC à une borne 0, 1, 2 distincte du système et permet ainsi de répondre à l'état de fonctionnement souhaité.

En cas de changement d'état de fonctionnement du réseau, on verra que l'unité de commande UC est à même de reconfigurer le système en commandant les interrupteurs de l'interface de commutation ISW en vue de répondre au nouvel état de fonctionnement du réseau.

Dans la suite de la description, il faut considérer que chaque interrupteur du dispositif PFC et de l'interface de commutation ISW peut être commandé à l'état ouvert ou à l'état fermé par une commande provenant de l'unité de commande UC.

A titre d'exemple, la figure 7 montre une interface de commutation ISW ayant une topologie maximale à neuf interrupteurs, qui permet de s'adapter sur un dispositif PFC quelle que soit la topologie de ce dispositif PFC et de lui permettre d'accroître son champ de fonctionnement à d'autres états que celui ou ceux pour lesquels il est normalement prévu. Selon la topologie intrinsèque du dispositif PFC, cette interface de commutation ISW pourra même permettre au système de répondre aux douze états de fonctionnement. Bien entendu, l'interface de commutation ISW pourra prendre des topologies intermédiaires avec un nombre d'interrupteurs plus limité, selon la topologie intrinsèque du dispositif PFC et selon le nombre d'états de fonctionnement que l'on souhaite voir gérer par le système.

Sur la figure 7, l'interface de commutation ISW présentée comporte ainsi :
- Trois interrupteurs S_{0A}, S_{0B}, S_{0C}, permettant trois connexions respectivement entre la borne 0 et la borne A, entre la borne 0 et la borne B et entre la borne 0 et la borne C ;
- Trois interrupteurs S_{1A}, S_{1B}, S_{1C}, permettant trois connexions respectivement entre la borne 1 et la borne A, entre la borne 1 et la borne B et entre la borne 1 et la borne C ;
- Trois interrupteurs S_{2A}, S_{2B}, S_{2C}, permettant trois connexions respectivement entre la borne 2 et la borne A, entre la borne 2 et la borne B et entre la borne 2 et la borne C ;

Tenant compte de cette topologie, on peut déterminer quels interrupteurs doivent être placés à l'état fermé pour obtenir chacune des configurations de connexion du dispositif PFC qui sont listées ci-dessus.

Pour chaque configuration de connexion, on a trois interrupteurs qui doivent être fermés uniquement. Fermer plus de trois interrupteurs conduirait à un court-circuit d'au moins deux bornes du dispositif PFC. Fermer moins d'interrupteurs conduirait à ne pas pouvoir faire circuler un des courants du nœud. Tout en respectant une distribution de chaque courant I₀, I₁, I₂ sur une borne A, B, C distincte, on doit ainsi fermer au moins :
- un des trois interrupteurs S_{0y},
- un interrupteur parmi les S_{1y},
- un interrupteur parmi les S_{2y},

Avec y égal à A, B, ou C.

On obtient ainsi le tableau ci-dessous :

| **N° de configuration de connexion** | **Interrupteurs à l'état fermé** | | |
|---|---|---|---|
| **I** | S_{0A} | S_{1B} | S_{2C} |
| **II** | S_{0C} | S_{1A} | S_{2B} |
| **III** | S_{0B} | S_{1C} | S_{2A} |
| **IV** | S_{0A} | S_{1C} | S_{2B} |
| **V** | Soc | S_{1B} | S_{2A} |
| **VI** | S_{0B} | S_{1A} | S_{2C} |

Cependant, il faut comprendre que l'invention ne consiste pas forcément à obtenir tous les états de fonctionnement listés ci-dessus. L'interface de commutation ISW du système peut être choisie pour gérer un nombre d'états de fonctionnement qui est inférieur au nombre Nₘₐₓ. Les configurations de commande de l'interface de commutation ISW, exécutées par l'unité de commande UC, peuvent également être configurées pour gérer un nombre défini d'états de fonctionnement qui est inférieur au nombre Nₘₐₓ.

Les figures 8 à 11 proposent plusieurs topologies du système, différant entre elles par la topologie de leur dispositif PFC et par la topologie de l'interface de commutation ISW employée. La topologie de l'interface de commutation ISW pourra différer selon le nombre d'états de fonctionnement total que l'on veut voir faire supporter au système.

Sur **la** **figure 8****,** le dispositif PFC présente une topologie issue d'une demande de brevet non encore publiée. Le dispositif PFC comporte deux sources de tension C1, C2 passives et une source de courant L. La première source de tension est connectée entre sa première borne (A) et sa troisième borne (C) et la deuxième source de tension est connectée entre sa deuxième borne (B) et sa troisième borne (C). La source de courant L est connectée alternativement à la première source de tension et à la deuxième source de tension grâce à un ensemble de commutation et permet d'assurer un transfert d'énergie entre la première source de tension et la deuxième source de tension. Des moyens de commande sont configurés pour commander l'ensemble de commutation de manière à réaliser ladite connexion de ladite source de courant en alternance, en parallèle de la première source de tension ou en parallèle de la deuxième source de tension et commander ainsi le transfert d'énergie entre la première source de tension et la deuxième source de tension via ladite source de courant.

La première source de tension peut comporter au moins un premier condensateur C₁ ayant une capacité déterminée.

La deuxième source de tension peut comporter au moins un deuxième condensateur C₂ ayant une capacité déterminée.

La source de courant peut comporter une inductance L.

L'ensemble de commutation comporte un interrupteur T1 de type IGBT et une diode D1, leur point milieu de connexion étant connecté à l'inductance.

Le dispositif PFC de cet exemple n'est réversible ni en tension ni en courant. Une fois inséré dans le réseau, il ne peut répondre qu'à un seul des douze états de fonctionnement listés ci-dessus.

A titre d'exemple et comme représenté sur la figure 8, en ajoutant une interface de commutation ISW à quatre interrupteurs, il est ainsi possible d'insérer le dispositif PFC de deux manières différentes dans le réseau et donc de répondre, par des commandes adaptées, à deux états de fonctionnement différents du réseau. L'interface de commutation ISW comporte ainsi les interrupteurs S_{1B}, S_{2B}, S_{1C} et S_{2C}.

Dans cette solution :
- Si la tension V₁₂ doit être négative, les interrupteurs S_{1B} et S_{2C} sont fermés.
- Si la tension V₁₂ doit être positive, les interrupteurs S_{2B} et S_{1C} sont fermés.

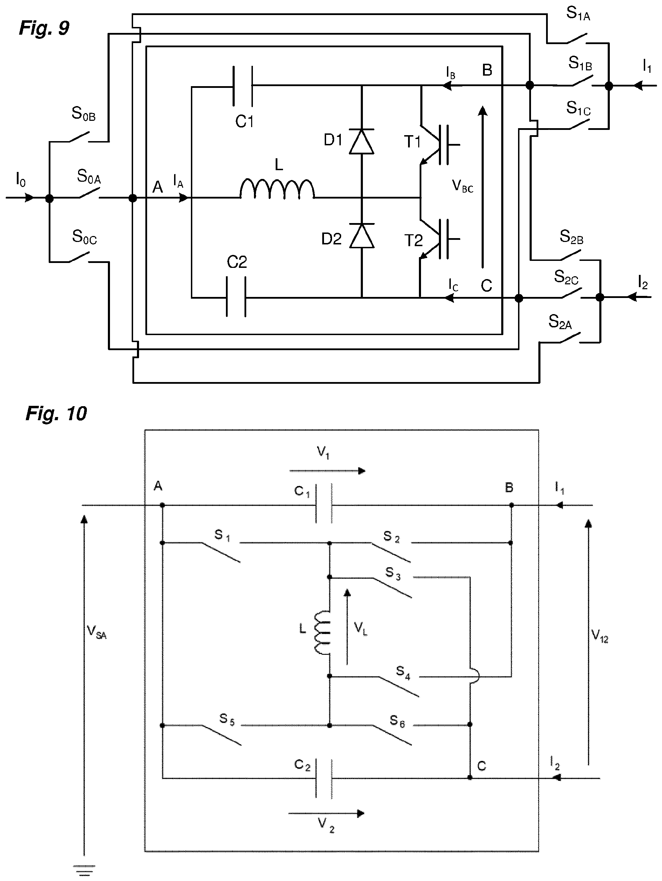

La **figure 9** montre un autre exemple de dispositif PFC. Par rapport à celui de la figure 8, celui-ci comporte un ensemble de commutation à deux commutateurs, chaque commutateur comprenant un interrupteur T1, T2 de type IGBT avec une diode D1, D2 en parallèle. Le point milieu entre les deux commutateurs est connecté à l'inductance L. Ce dispositif PFC peut intrinsèquement répondre à deux états de fonctionnement du réseau :
- V_{BC}>0, I_{A} >0, I_{B} <0, I_{C} <0
- V_{BC}>0, I_{A} <0, I_{B} >0, I_{C} >0

En ajoutant l'interface de commutation ISW supplémentaire du système et des commandes adaptées, il est possible de répondre aux douze états de fonctionnement du réseau. Les six configurations de connexion évoquées ci-dessus seront cependant nécessaires, comme on peut le voir dans le tableau ci-dessous :

| **Etat de fonctionnement du réseau** | **N° de configuration de connexion** |
|---|---|
| 1 | V |
| 2 | III |
| 3 | VI |
| 4 | II |
| 5 | I |
| 6 | IV |
| 7 | V |
| 8 | III |
| 9 | VI |
| 10 | II |
| 11 | I |
| 12 | IV |

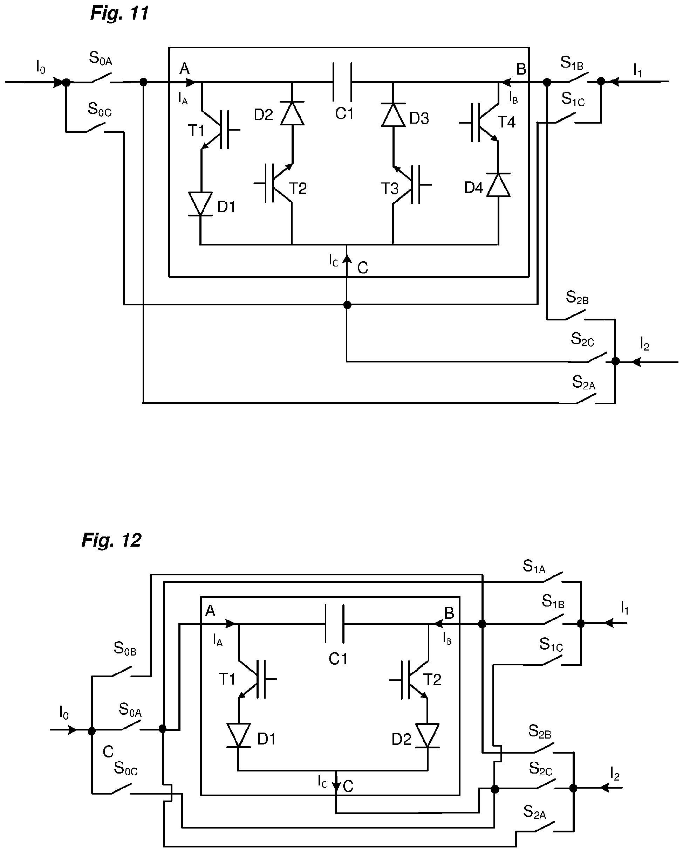

La méthode de reconfiguration de ce dispositif sera explicitée ci-dessous en liaison avec les figures 12A à 12C.

On peut noter que les dispositifs PFC des figures 8 et 9 sont des topologies particulières d'un dispositif PFC ayant l'architecture générale représentée sur la figure 10.

Dans cette architecture la plus générale de ce dispositif PFC, représentée sur la figure 10, les moyens de commutation du dispositif comportent six commutateurs :
- Un premier ensemble de deux commutateurs S1, S2 connecté entre la première borne A et la troisième borne C du dispositif (en parallèle de la première source de tension, c'est-à-dire du premier condensateur C1), les deux commutateurs S1, S2 définissant entre eux un premier point milieu de connexion ;
- Un deuxième ensemble de deux commutateurs S5, S6 connecté entre la deuxième borne C et la troisième borne C (en parallèle de la deuxième source de tension, c'est-à-dire du deuxième condensateur C2), les deux commutateurs S5, S6 définissant entre eux un deuxième point milieu de connexion ;
- Un commutateur S3 connecté entre la deuxième borne B du dispositif et le premier point milieu du premier ensemble de commutateurs ;
- Un commutateur S4 connecté entre la première borne A du dispositif et le deuxième point milieu du deuxième ensemble de commutateurs ;

Dans cette architecture générale, l'inductance L est connectée entre le premier point milieu et le deuxième point milieu.

Chaque commutateur des moyens de commutation pourra ensuite être choisi en fonction du signe des valeurs suivantes :
Le courant I₁ ;
Le courant I₂ ;
Le ratio I₁/I₂ ;
La différence I₁-I₂ ;
La tension V₁₂=V₁-V₂ ;
Le ratio (V₁-V₂)/(I₁+I₂) ;

Selon le fonctionnement du réseau, les commutateurs S1 à S6 sont choisis selon une réalisation particulière afin de répondre au besoin. De manière non exhaustive et non limitative, chaque commutateur sera alors choisi selon l'une des réalisations listées ci-dessous :
- Un circuit ouvert (c'est-à-dire aucune liaison électrique) ;
- Un court-circuit (c'est-à-dire une connexion permanente) ;
- Une diode ;
- Un interrupteur contrôlé non réversible (par exemple : IGBT ou BJT) ;
- Un interrupteur contrôlé réversible en courant (par exemple : IGBT avec diode en parallèle ou MOSFET) ;
- Un interrupteur contrôlé réversible en tension (Par exemple : IGBT et diode en série) ;
- Un interrupteur contrôlé réversible en courant et tension (Par exemple : deux IGBT avec diode en série) ;
- Un commutateur mécanique seul ;
- Un commutateur mécanique en série avec une diode ;
- Un commutateur mécanique en série avec un interrupteur contrôlé ;
- Eventuellement une combinaison de plusieurs de ces réalisations ;

Les dispositifs PFC représentés sur figures 8 et 9 sont donc un cas particulier de cette topologie et l'interface de commutation ISW ajoutée permet d'étendre leurs capacités de fonctionnement. D'autres topologies particulières de dispositif PFC peuvent bien entendu être générées à partir de cette architecture générale, en suivant les principes décrits ci-dessus. Bien entendu, dans le cadre de l'invention, ces topologies devront disposer de capacités de réversibilités limitées afin de justifier la présence de l'interface de commutation ISW qui est ajoutée.

La **figure 11** représente un dispositif PFC selon une autre topologie. Il comporte quatre commutateurs, comprenant chacun un transistor IGBT T1, T2, T3, T4 et une diode D1, D2, D3, D4 en série. Cette topologie est décrite dans la demande de brevet EP3007301A1. Le dispositif PFC est configuré pour gérer intrinsèquement quatre états de fonctionnement du réseau, car il est réversible en courant et en tension. En l'insérant dans le réseau de trois manières différentes, c'est-à-dire avec seulement trois configurations de connexion, il est possible de répondre aux douze états de fonctionnement du réseau. Le tableau suivant donne un exemple des configurations de connexion qui sont utilisées pour répondre à chaque état de fonctionnement. Comme seulement trois configurations de connexion sont nécessaires, les interrupteurs S_{0B} et S_{1A} ne sont pas nécessaires.

| **Etat de fonctionnement du réseau** | **N° de configuration de connexion** |
|---|---|
| 1 | **I** |
| 2 | **I** |
| 3 | IV |
| 4 | IV |
| 5 | V |
| 6 | V |
| 7 | **I** |
| 8 | **I** |
| 9 | IV |
| 10 | IV |
| 11 | V |
| 12 | V |

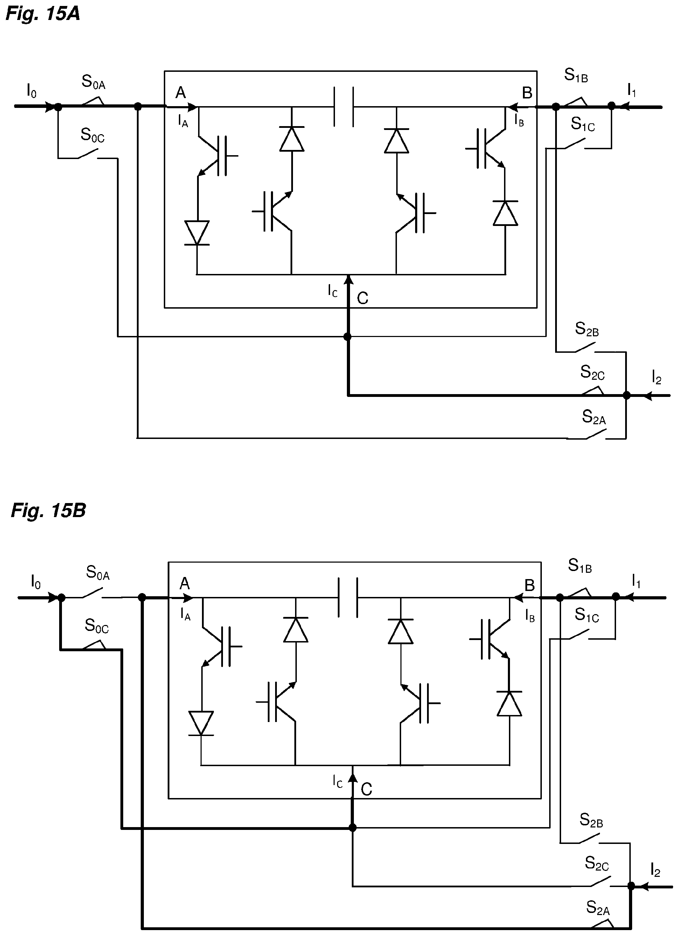

La méthode de reconfiguration de ce dispositif sera explicitée ci-dessous en liaison avec les figures 15A et 15B.

Par ailleurs, il faut noter que, pour certaines topologies de dispositif PFC, il peut ne pas être possible de répondre aux douze états de fonctionnement du réseau, même avec l'apport de l'interface de commutation ISW du système et des commandes adaptées. C'est le cas par exemple lorsque le dispositif PFC présente une topologie telle que celle qui est également décrite dans la demande de brevet EP3007301A1 et représentée sur la figure 12. Elle s'avère être réversible en tension mais pas en courant. Il consiste en l'ajout d'une source de tension passive (condensateur) en série avec la première liaison et la deuxième liaison en alternance, des commutateurs étant commandés de manière adaptée pour assurer cette alternance de connexion. Les commutateurs comportent des interrupteurs de puissance de type IGBT et sont réversibles en tension grâce à l'ajout d'une diode en série avec chaque interrupteur.

Il est ainsi capable de répondre à deux états de fonctionnement du réseau. Mais comme il ne fonctionne qu'avec deux courants « entrants » I_{A}, I_{B} aux bornes A et B et un courant « sortant » I_{C} à la borne C, quelle que soit la manière de le connecter, il ne pourra pas répondre aux états de fonctionnement pour lesquels deux courants sortent du nœud, c'est-à-dire les états de fonctionnement n°5, 6, 7, 8, 9 et 10. En revanche, le principe de l'invention reste valable pour répondre aux autres états de fonctionnement non pris en charge par le dispositif PFC lui-même.

Selon un aspect particulier de l'invention, lorsque l'état de fonctionnement du réseau a changé, il est également nécessaire de prévoir une méthode de commande exécutée par l'unité de commande UC, permettant de mettre en œuvre une reconfiguration, c'est-à-dire de passer d'une configuration de connexion du dispositif PFC à une autre configuration de connexion du dispositif PFC. Il s'agit alors de venir connecter chaque borne A, B, C du dispositif PFC à une borne 0, 1, 2 distincte du système pour établir la nouvelle configuration de connexion, par des commandes adaptées des interrupteurs de l'interface de commutation ISW.

Comme décrit ci-dessus, si les neuf interrupteurs sont présents, le dispositif PFC peut être inséré dans le réseau à travers six configurations de connexion distinctes. Chaque configuration est définie par la fermeture de trois interrupteurs qui permettent de faire correspondre les courants du dispositif PFC aux courants du nœud où il est inséré.

Lors de la reconfiguration, il est ainsi nécessaire de procéder, via des commandes adaptées, à la fermeture de certains interrupteurs et à l'ouverture d'autres interrupteurs de l'interface de commutation ISW du système.

Cette reconfiguration peut être nécessaire lorsque :
- Un ou plusieurs courants du nœud, où le dispositif PFC est inséré, change de signe ;
- La tension insérée par le dispositif PFC lui-même change de signe ;
- Un ou plusieurs courants du nœud et la tension insérée par le dispositif PFC changent de signe.

Il faut noter que la fermeture de plus de trois interrupteurs peut court-circuiter des condensateurs du dispositif PFC. Ceci conduit à une détérioration de ceux-ci si la tension à leurs bornes n'est pas nulle lorsque le court-circuit est créé. Aussi, une connexion utilisant moins de trois interrupteurs pourra conduire à un circuit ouvert dans les inductances du dispositif PFC et du réseau. Ceci risque de détériorer le circuit à cause des surtensions provoquées par la coupure du courant dans un circuit inductif.

Ce changement de configuration doit donc être fait en tenant compte des contraintes suivantes :
∘ Ne pas créer de court-circuit dans les condensateurs du dispositif PFC ;
∘ Ne pas interrompre le courant dans les inductances du dispositif PFC et dans tout le réseau.

Ainsi, en tenant compte de ces contraintes, afin de pouvoir fermer et ouvrir les interrupteurs sans qu'il y ait de risque sur le convertisseur et sur tout le réseau, la procédure proposée et coordonnée par l'unité de commande UC pour la reconfiguration du dispositif PFC a deux variantes :
▪ Reconfiguration par le changement d'état de quatre interrupteurs du système (par exemple passage de la configuration II à la configuration IV) ;
▪ Reconfiguration par le changement d'état de six interrupteurs du système (par exemple passage de la configuration V à la configuration VI) ;

Le dispositif PFC étant un convertisseur d'électronique de puissance, celui-ci contient des interrupteurs contrôlés. La commande de ce convertisseur par l'unité de commande UC est caractérisée par un rapport cyclique a. Ce rapport cyclique impose la répartition des courants de la maille qui traversent le dispositif PFC et les tensions aux bornes des condensateurs de celui-ci. Ainsi, la tension insérée dans la maille par le dispositif PFC dépend, entre autres, de la valeur de ce rapport cyclique. Il existe une valeur de rapport cyclique qui permet d'annuler soit la tension aux bornes d'un condensateur du dispositif PFC, soit les tensions aux bornes de tous les condensateurs du dispositif PFC, y compris la tension insérée dans la maille (V₁₂) par le dispositif.

La procédure à suivre pour la reconfiguration du dispositif PFC dans le réseau est ainsi la suivante :
- Etape 1 : Fonctionnement du réseau et du dispositif PFC sous un état de fonctionnement initial avec le contrôle (rapport cyclique) approprié.
- Etape 2 : Application par l'unité de commande UC du rapport cyclique qui permet d'annuler la ou les tensions du dispositif PFC, et donc d'annuler les tensions des condensateurs de son convertisseur. Le plus simple est de prendre α=0 ou 1 selon l'état de fonctionnement initial.

- Etape 3 : Fermeture des trois interrupteurs de la configuration de connexion finale. Le dispositif PFC est alors court-circuité.
- Etape 4 : Application par l'unité de commande UC du rapport cyclique qui permet d'annuler la ou les tensions du dispositif PFC, et donc d'annuler les tensions des condensateurs de son convertisseur. Le plus simple est de prendre α=0 ou 1 selon l'état de fonctionnement final. Ceci assure que la tension aux bornes des interrupteurs reste nulle après leur ouverture ce qui évite la création ou le maintien d'un arc électrique à leurs bornes.
- Etape 5 : Ouvrir les interrupteurs de la configuration initiale.
- Etape 6 : Fonctionnement du réseau et du dispositif PFC sous l'état de fonctionnement final avec le rapport cyclique permettant d'obtenir la répartition des courants désirée.

Cette procédure à deux variantes est généralisable pour tous les dispositifs PFC insérés selon l'invention proposée. On note aussi que si le réseau peut fonctionner sans PFC, celui-ci peut être "effacé" ou "by-passé" en suivant les étapes 1 à 3 (avec, à l'étape 3, la possibilité de fermer tous les interrupteurs). Lorsque le PFC doit entrer en fonctionnement, il est inséré dans le réseau en suivant les étapes 4 à 6.

### Exemple de reconfiguration d'un dispositif PFC - Etat de fonctionnement n°2 à état de fonctionnement n°6

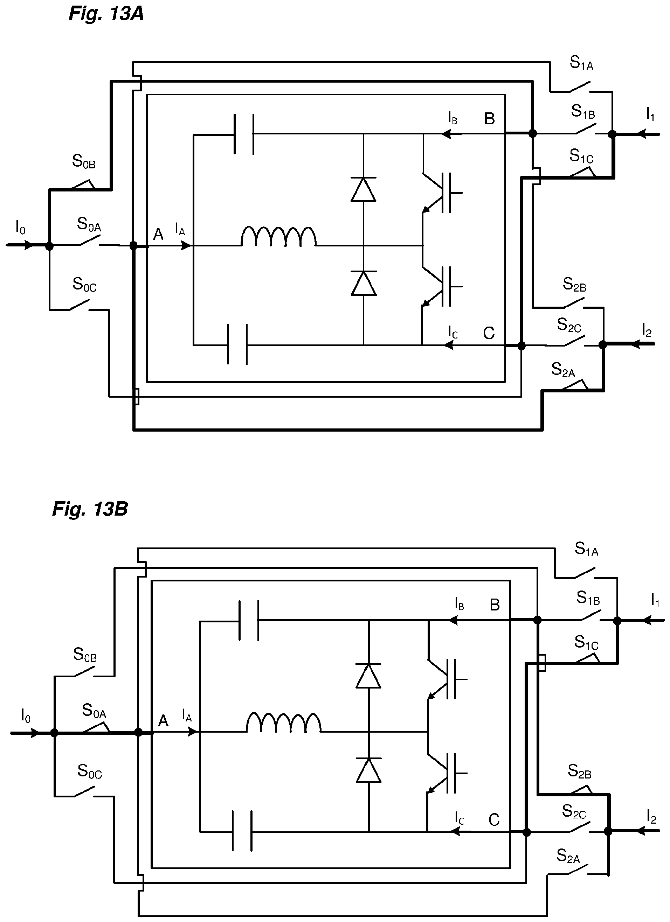

Les figures 13A à 13C permettent d'illustrer le principe de reconfiguration d'un dispositif PFC tel que celui représenté sur la figure 9 décrite ci-dessus. Le système utilise une interface de commutation ISW à neuf interrupteurs commandables par l'unité de commande UC.

Comme représenté sur la figure 13A, le réseau est dans l'état de fonctionnement n°2.

Le passage dans l'état de fonctionnement n°6 nécessite une reconfiguration du dispositif PFC. Pour rappel, les deux états de fonctionnement sont les suivants :

| **Etat de fonctionnement du réseau** | **I₀** | **I₁** | **I₂** | **V₁₂** |
|---|---|---|---|---|
| **2** | + | + | - | - |
| **6** | + | - | - | - |

La reconfiguration est nécessaire du fait du changement de signe du courant I₁.

Comme décrit ci-dessus, la configuration de connexion qui correspond à l'état de fonctionnement n°2 correspond à la configuration III et la configuration de connexion qui correspond à l'état de fonctionnement n°6 est la configuration IV :

| **Etat de fonctionnement du réseau** | **N° de configuration de connexion** |
|---|---|
| 2 | III |
| 6 | IV |

Pour rappel, les configurations III et IV sont les suivantes :

| **N° de configuration de connexion** | **Interrupteurs à l'état fermé** | | |
|---|---|---|---|
| **III** | S_{0B} | S_{1C} | S_{2A} |
| **IV** | S_{0A} | S_{1C} | S_{2B} |

La reconfiguration nécessite, dans ce cas, le changement d'état de quatre interrupteurs mécaniques de l'interface de commutation ISW :
➢ Pour la configuration de connexion initiale III, les interrupteurs S_{0B} et S_{2A}, doivent passer de l'état fermé à l'état ouvert ;
➢ Pour obtenir la configuration de connexion finale IV les interrupteurs S_{0A} et S_{2B}, doivent passer de l'état ouvert à l'état fermé ;
L'interrupteur S_{1C} étant commun aux deux configurations de connexion, il est donc maintenu donc son état fermé. Il correspond à la connexion avec le courant I₁ qui change de signe.

Pour l'état de fonctionnement n°2, lorsqu'on applique un rapport cyclique de 1, l'interrupteur électronique S₁ (correspondant à l'IGBT T₁ et la diode D₁ dans la figure ci-dessus) est fermé durant toute la période T, tandis que l'interrupteur électronique S₂ (correspondant à l'IGBT T₂ et la diode D2 dans la figure ci-dessus) est ouvert durant toute la période T.

Comme les interrupteurs électroniques S₁ et S₂ ne commutent plus sur la période T, l'inductance est traversée par un courant constant. La tension à ses bornes est donc nulle, de même que la tension aux bornes du condensateur C1.

La fermeture de l'interrupteur S_{0A} alors que l'interrupteur S_{0B} était initialement fermé, conduit à un court-circuit du condensateur C₁. La fermeture de l'interrupteur S_{2B} alors que l'interrupteur S_{2A} était initialement fermé, conduit à un court-circuit du même condensateur. Ceci n'entraîne pas de problème dans le convertisseur car la tension V_{BA} a été annulée précédemment (par la connexion permanente avec l'inductance).

A ce stade, il est possible de suivre successivement les étapes suivantes :
- Fermer les interrupteurs S_{0A} et S_{2B} ;
- Maintenir le rapport cyclique de commande du convertisseur du dispositif PFC à 1 ;
- Ouvrir les interrupteurs S_{0B} et S_{2A} ;
- Appliquer le rapport cyclique permettant d'obtenir la répartition des courants désirée pour la configuration de connexion IV correspondant à l'état de fonctionnement n°6 comme représenté sur la figure 13B.

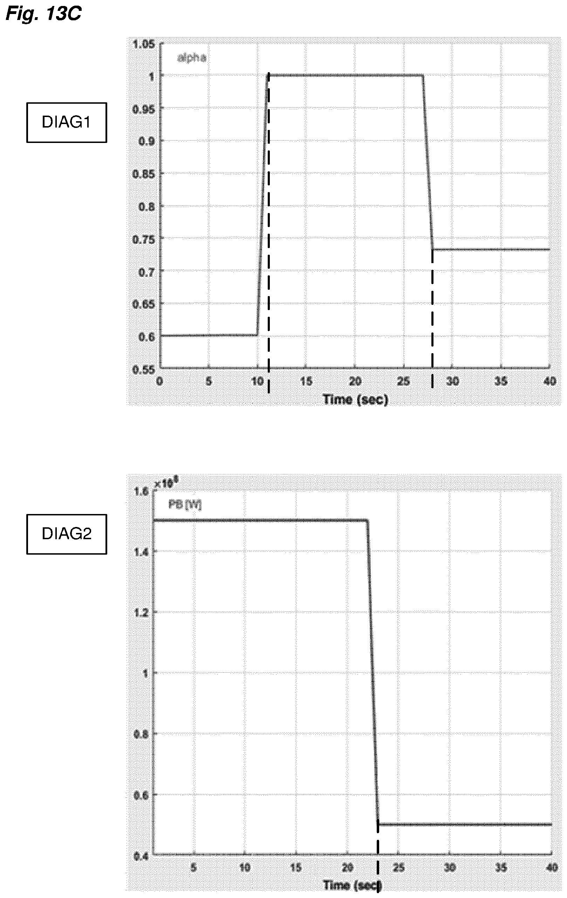

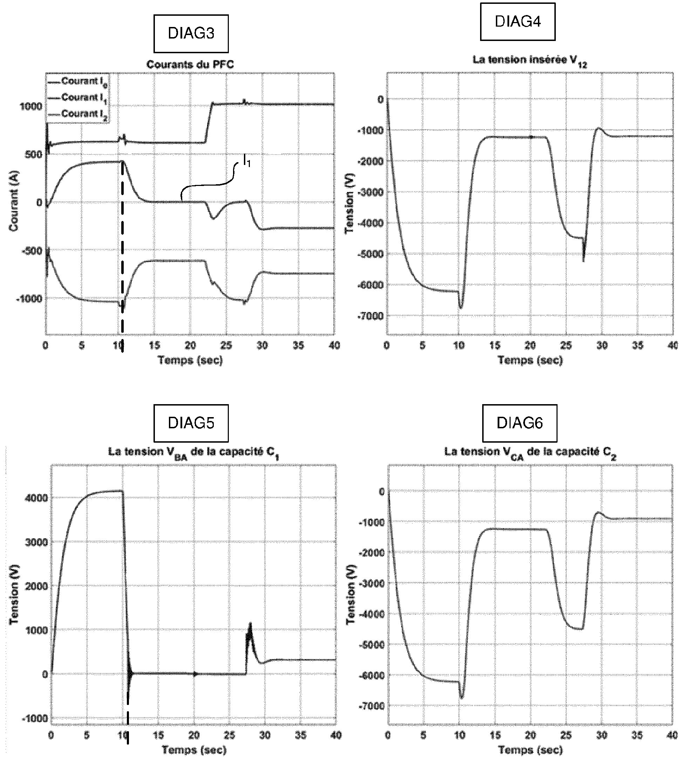

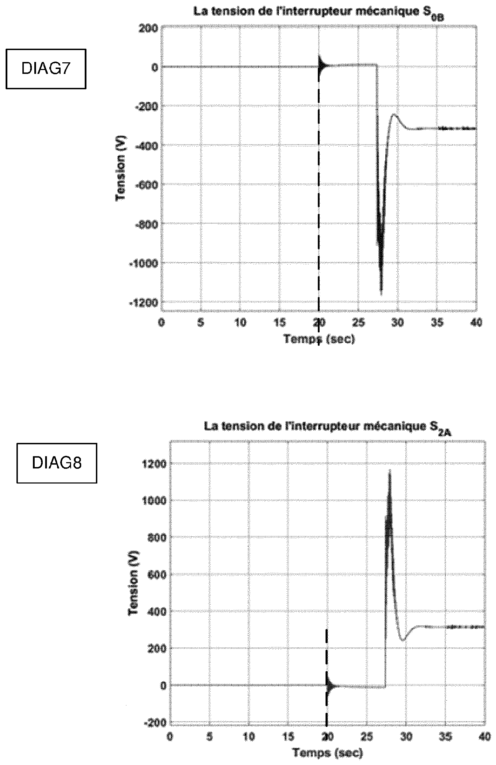

La figure 13C représente plusieurs courbes de simulation permettant d'illustrer le principe de reconfiguration opéré.
- Initialement, le point de fonctionnement est fixé à (P_{C}, P_{B}) = (-300 MW, 150 MW) (DIAG2 pour P_{B}) et le rapport cyclique à 0.6 (voir diagramme DIAG1). Initialement, le réseau fonctionne donc suivant l'état de fonctionnement n°2 avec la configuration de connexion III.
- Le rapport cyclique est modifié pour atteindre la valeur 1 à t=11s (DIAG1).
- Ce changement de rapport cyclique conduit à annuler le courant I₁ (DIAG3) et la tension V_{BA} aux bornes du condensateur C₁ (DIAG5).
- A t = 20s, les interrupteurs S_{0B} et S_{2A} sont ouverts (DIAG7 et DIAG8) et le rapport cyclique reste maintenu à 1 (DIAG1) après leur ouverture afin de maintenir une tension nulle aux bornes de ceux-ci comme montré sur les diagrammes, permettant d'éviter la création d'un arc électrique.
- Le nouveau point de fonctionnement (P_{C}, P_{B}) = (-300 MW, 50 MW), est appliqué à t=23s (voir DIAG2 courbe de variation PB).
- A partir de t=28s, un rapport cyclique de 0.75 est appliqué (DIAG1), permettant au convertisseur du dispositif PFC d'insérer une tension permettant de répondre à l'état de fonctionnement n°6.
- Les variations de la tension V_{CA} (DIAG6) et V₁₂ (DIAG4) sont également représentées sur la figure 13C.

### Exemple de reconfiguration d'un dispositif PFC - Etat de fonctionnement n°2 à état de fonctionnement n°10

La méthode de reconfiguration s'applique de la même manière lorsque six interrupteurs sont impliqués. Pour un dispositif PFC présentant une topologie identique à celle décrite ci-dessus en liaison avec la figure 9, c'est le cas lorsque l'on doit passer de l'état de fonctionnement n°2 à l'état de fonctionnement n°10 :

| **Etat de fonctionnement du réseau** | **I₀** | **I₁** | **I₂** | **V₁₂** |
|---|---|---|---|---|
| **2** | + | + | - | - |
| **10** | - | + | - | - |

Pour rappel, on a :

| **Etat de fonctionnement du réseau** | **N° de configuration de connexion** |
|---|---|
| 2 | III |
| 10 | II |

La reconfiguration, dans ce cas, nécessite le changement d'état des trois interrupteurs de chaque configuration :
- La configuration initiale III, correspondant aux interrupteurs fermés S_{0B}, S_{1C}, et S_{2A} ;
- La configuration finale II, correspondant aux interrupteurs fermés Soc, S_{1A}, et S_{2B} ;

| **N° de configuration de connexion** | **Interrupteurs à l'état fermé** | | |
|---|---|---|---|
| **II** | Soc | S_{1A} | S_{2B} |
| **III** | S_{0B} | S_{1C} | S_{2A} |

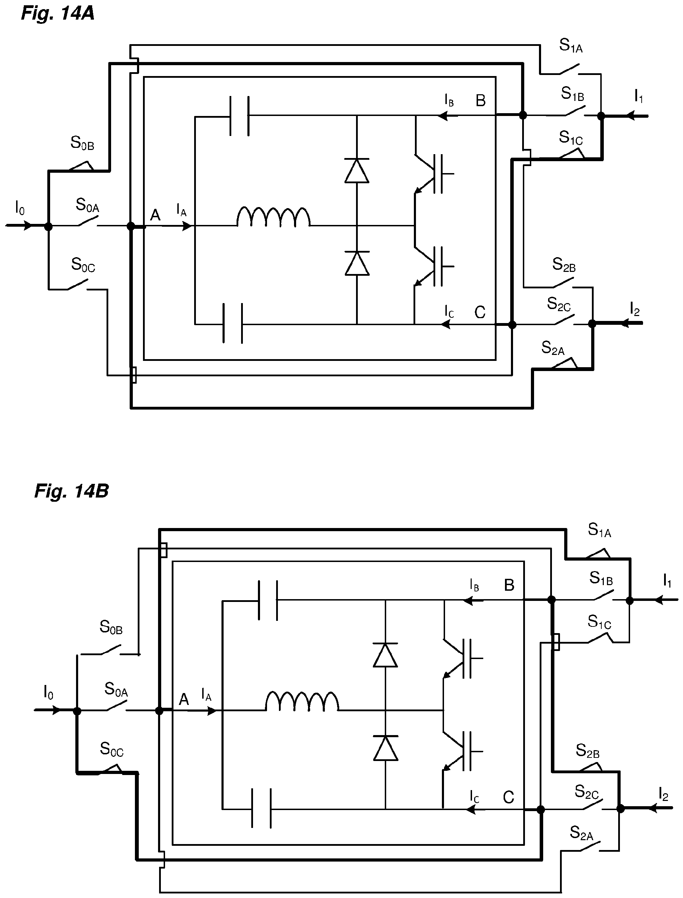

Initialement, comme représenté sur la figure 14A, le dispositif PFC est inséré dans le réseau selon la configuration de connexion III pour répondre à l'état de fonctionnement n°2.

Dans le cas de cette configuration de connexion initiale III, lorsqu'on applique un rapport cyclique très grand, de valeur 1 par exemple, les tensions V_{BC}, V_{CA} et V_{BA} tendent vers 0. Pour la configuration de connexion finale II, ces tensions s'annulent lorsqu'un rapport cyclique de 0 est appliqué.

A ce stade, il est ainsi possible de suivre successivement les étapes suivantes :
- Fermer les interrupteurs S_{0C}, S_{1A}, et S_{2B} ;
- Appliquer un rapport cyclique de valeur 0 pour avoir le rapport cyclique pour s'adapter à la configuration de connexion II.
- Ouvrir les interrupteurs S_{0B}, S_{1C}, et S_{2A}
- Appliquer le rapport cyclique permettant d'obtenir la répartition des courants désirée.

Pour l'état de fonctionnement n°10 final, le dispositif PFC est inséré dans le réseau, par des commandes adaptées, suivant la configuration II comme montré sur la figure 14B.

### Exemple de reconfiguration d'un dispositif PFC - Etat de fonctionnement n°2 à état de fonctionnement n°6

La méthode de reconfiguration est appliquée à un dispositif PFC doté de la topologie représentée sur la figure 11.

Comme représenté sur la figure 15A, initialement, le dispositif PFC est inséré dans le réseau, par des commandes adaptées, suivant la configuration de connexion I correspondant à l'état de fonctionnement n°2 du réseau.

Pour répondre à l'état de fonctionnement n°6, le système doit passer dans la configuration de connexion V.

| **Etat de fonctionnement du réseau** | **I₀** | **I₁** | **I₂** | **V₁₂** |
|---|---|---|---|---|
| **2** | + | + | - | - |
| **6** | + | - | - | - |

| **Etat de fonctionnement du réseau** | **N° de configuration de connexion** |
|---|---|
| 2 | **I** |
| 6 | V |

Pour rappel, on a :

| **N° de configuration de connexion** | **Interrupteurs à l'état fermé** | | |
|---|---|---|---|
| **I** | S_{0A} | S_{1B} | S_{2C} |
| **V** | Soc | S_{1B} | S_{2A} |

Cette reconfiguration avec ce convertisseur nécessite le changement d'état de deux interrupteurs mécaniques de chaque configuration :
➢ Pour la configuration de connexion initiale I, les interrupteurs S_{0A} et S_{2C} doivent passer de l'état fermé à l'état ouvert ;
➢ Pour la configuration de connexion finale V, les interrupteurs S_{0C} et S_{2A} doivent passer de l'état ouvert à l'état fermé ;
L'interrupteur S_{1B} étant commun aux deux configurations, il est donc maintenu à l'état fermé. Il correspond à la connexion avec le courant qui change de signe I₁.

Comme lors du premier exemple décrit ci-dessus, la séquence à appliquer est la suivante :
- Fermer les interrupteurs S_{0C} et S_{2A} ;
- Maintenir le rapport cyclique de commande du convertisseur du dispositif PFC à 1 ;
- Ouvrir les interrupteurs S_{0A} et S_{2C};
- Appliquer le rapport cyclique permettant d'obtenir la répartition des courants désirée pour la configuration de connexion V correspondant à l'état de fonctionnement n°6 comme représenté sur la figure 15B.

Comme indiqué ci-dessus, l'unité de commande UC est configurée pour gérer la méthode de reconfiguration du dispositif PFC en commandant les interrupteurs électroniques du dispositif PFC lors du changement de rapport cyclique et ceux de l'interface de commutation ISW du système pour changer la configuration de connexion, selon la séquence de commande à appliquer.

La solution proposée a l'avantage de permettre de répondre aux différents états de fonctionnement du réseau, en employant peu d'interrupteurs électroniques de puissance, simplement en ajoutant l'interface de commutation ISW adaptée.

Elle nécessite des interrupteurs (dimensionnés pour le courant de ligne et avec des tensions à leurs bornes égales aux tensions aux bornes du PFC, c'est-à-dire de l'ordre de grandeur des chutes de tension dans les lignes (quelques kV)).

Selon un aspect particulier de l'invention, le système de l'invention pourra être réalisé en deux parties principales, une première partie comportant le dispositif PFC, par exemple réalisé sous la forme d'un convertisseur d'électronique de puissance avec ses composants choisis selon sa topologie et une deuxième partie intégrant l'interface de commutation, par exemple réalisée sous la forme d'un support intégrant les interrupteurs mécaniques ou électromécaniques de l'interface et mettant à disposition les bornes 0, 1, 2 à connecter au réseau et de l'autre côté trois bornes à relier aux bornes A, B, C du dispositif PFC. Un tel exemple d'architecture est illustré par la figure 6 déjà évoquée ci-dessus.

## Revendications

1. Système destiné à être employé dans un réseau maillé à courant continu qui comporte au moins une maille présentant au moins un nœud entre une première liaison, une deuxième liaison et une troisième liaison, ledit réseau étant susceptible de fonctionner suivant un nombre N₁ d'états de fonctionnement, chaque état de fonctionnement du réseau étant défini à partir du signe du courant électrique présent dans la première liaison, du signe du courant électrique présent dans la deuxième liaison, du signe du courant électrique présent dans la troisième liaison et d'une tension présente entre deux des liaisons de la maille, ledit système comportant :
- Un dispositif de contrôle de flux de puissance qui comporte une première borne (A), une deuxième borne (B) et une troisième borne (C), ledit dispositif comportant au moins une source de tension commandée connectée entre deux de ses bornes, ladite source de tension commandée du dispositif de contrôle de flux de puissance présentant une topologie intrinsèque agencée pour répondre à un nombre N₀ d'états de fonctionnement du réseau, N₀ étant supérieur ou égal à 1 et inférieur à N₁,
- Ledit système étant **caractérisé en ce qu'**il comporte :
- Une première borne destinée à être connectée à la première liaison, une deuxième borne destinée à être connectée à la deuxième liaison et une troisième borne destinée à être connectée à la troisième liaison,
- Une interface de commutation (ISW) intercalée entre lesdites bornes du système et lesdites bornes du dispositif, ladite interface de commutation (ISW) comportant un nombre M d'interrupteurs, M étant supérieur ou égal à quatre et choisi en tenant compte de la valeur dudit nombre N₀ et dudit nombre N₁,
- Une unité de commande (UC) configurée pour commander les M interrupteurs de ladite interface de commutation (ISW) en vue de connecter chaque borne (A, B, C) dudit dispositif de contrôle de flux de puissance à une borne distincte du système et de répondre à un état de fonctionnement du réseau.

2. Système selon la revendication 1, **caractérisé en ce que** l'interface de commutation comporte neuf interrupteurs, répartis en trois groupes de trois, un premier groupe de trois interrupteurs qui comporte :
- un premier interrupteur (S_{0A}) connecté en série sur une liaison reliant la première borne du système à la première borne du dispositif de contrôle de flux de puissance,
- un deuxième interrupteur (S_{0B}) connecté en série sur une liaison reliant la première borne du système à la deuxième borne du dispositif de contrôle de flux de puissance, et
- un troisième interrupteur (Soc) connecté en série sur une liaison reliant la première borne du système à la troisième borne du dispositif de contrôle de flux de puissance,
un deuxième groupe de trois interrupteurs qui comporte :
- un premier interrupteur (S_{1A}) connecté en série sur une liaison reliant la deuxième borne du système à la première borne du dispositif de contrôle de flux de puissance,
- un deuxième interrupteur (S_{1B}) connecté en série sur une liaison reliant la deuxième borne du système à la deuxième borne du dispositif de contrôle de flux de puissance, et
- un troisième interrupteur (S_{1C}) connecté en série sur une liaison reliant la deuxième borne du système à la troisième borne du dispositif de contrôle de flux de puissance,
un troisième groupe de trois interrupteurs qui comporte :
- un premier interrupteur (S_{2A}) connecté en série sur une liaison reliant la troisième borne du système à la première borne du dispositif de contrôle de flux de puissance,
- un deuxième interrupteur (S_{2B}) connecté en série sur une liaison reliant la troisième borne du système à la deuxième borne du dispositif de contrôle de flux de puissance, et
- un troisième interrupteur (S_{2C}) connecté en série sur une liaison reliant la troisième borne du système à la troisième borne du dispositif de contrôle de flux de puissance.

3. Système selon la revendication 1 ou 2, **caractérisé en ce que** l'interface de commutation est configurée et commandée pour permettre au dispositif de contrôle de flux de puissance de se connecter aux trois bornes du système selon au moins deux configurations de connexion distinctes, une configuration de connexion étant définie par la connexion directe de chaque borne du système à une seule borne du dispositif.

4. Système selon la revendication 3, **caractérisé en ce que** l'interface de commutation est configurée et commandée pour permettre au dispositif de contrôle de flux de puissance de se connecter aux trois bornes du système selon au plus six configurations de connexion distinctes.

5. Système selon l'une des revendications 1 à 4, **caractérisé en ce que** le dispositif de contrôle de flux de puissance comporte un ensemble de commutation dans lequel tous les interrupteurs sont de type électronique.

6. Système selon l'une des revendications 1 à 5, **caractérisé en ce que** les interrupteurs de l'interface de commutation sont tous de type mécanique ou électromécanique.

7. Système selon l'une des revendications 1 à 6, **caractérisé en ce que** le réseau est susceptible de fonctionner selon un nombre Nₘₐₓ d'états de fonctionnement égal à douze.

8. Procédé de commande d'un système tel que défini dans l'une des revendications 1 à 6, afin de réaliser une reconfiguration du dispositif de contrôle de flux de puissance pour le faire passer d'une configuration de connexion initiale permettant de répondre à un premier état de fonctionnement du réseau à une configuration de connexion finale différente en vue de répondre à un deuxième état de fonctionnement du réseau, une configuration de connexion étant définie par la connexion directe de chaque borne du système à une seule borne du dispositif, ledit procédé étant **caractérisé en ce qu'**il comporte les étapes suivantes :
- Application d'un premier rapport cyclique au dispositif de contrôle de flux de puissance en vue d'annuler la tension d'au moins une de ses sources de tension,
- Fermeture des interrupteurs de l'interface de commutation, permettant d'établir la configuration de connexion finale,
- Application d'un deuxième rapport cyclique au dispositif de contrôle de flux de puissance en vue d'annuler la tension d'au moins une de ses sources de tension,
- Ouverture des interrupteurs de l'interface de commutation, correspondant à la configuration de connexion initiale,
- Application d'un troisième rapport cyclique au dispositif de contrôle de flux de puissance en vue d'obtenir la répartition des courants désirée dans la maille.

9. Procédé selon la revendication 8, **caractérisé en ce que** lors de la première étape d'application du rapport cyclique, celui-ci est fixé égal à 0 ou à 1 selon le premier état de fonctionnement du réseau.

10. Procédé selon la revendication 8 ou 9, **caractérisé en ce que** lors de la deuxième étape d'application du rapport cyclique, celui-ci est fixé égal à 0 ou à 1 selon le deuxième état de fonctionnement final du réseau.

## Patentansprüche

1. System, das dazu gedacht ist, in einem vermaschten Gleichstromnetz eingesetzt zu werden, das zumindest eine Masche beinhaltet, die zumindest einen Knoten zwischen einer ersten Verbindung, einer zweiten Verbindung und einer dritten Verbindung aufweist, wobei das Netz in der Lage ist, gemäß einer Anzahl N₁ an Funktionszuständen zu funktionieren, wobei jeder Funktionszustand des Netzes anhand des Signals des elektrischen Stroms, der in der ersten Verbindung vorhanden ist, des Signals des elektrischen Stroms, der in der zweiten Verbindung vorhanden ist, des Signals des elektrischen Stroms, der in der dritten Verbindung vorhanden ist, und einer Spannung definiert ist, die zwischen zwei der Verbindungen der Masche vorhanden ist, wobei das System Folgendes beinhaltet:
- eine Kraftflusssteuervorrichtung, die einen ersten Anschluss (A), einen zweiten Anschluss (B) und einen dritten Anschluss (C) beinhaltet, wobei die Vorrichtung zumindest eine gesteuerte Spannungsquelle beinhaltet, die zwischen zwei ihrer Anschlüsse verbunden ist, wobei die gesteuerte Spannungsquelle der Kraftflusssteuervorrichtung eine intrinsische Topologie aufweist, die ausgebildet ist, um auf eine Anzahl N₀ an Funktionszuständen des Netzes zu reagieren, wobei N₀ größer als oder gleich 1 und kleiner als N₁ ist,
- wobei das System **dadurch gekennzeichnet ist, dass** es Folgendes beinhaltet:
- einen ersten Anschluss, der dazu gedacht ist, mit der ersten Verbindung verbunden zu sein, einen zweiten Anschluss, der dazu gedacht ist, mit der zweiten Verbindung verbunden zu sein und einen dritten Anschluss, der dazu gedacht ist, mit der dritten Verbindung verbunden zu sein,
- eine Schaltschnittstelle (ISW), die zwischen den Anschlüssen des Systems und den Anschlüssen der Vorrichtung eingefügt ist, wobei die Schaltschnittstelle (ISW) eine Anzahl M an Schaltern beinhaltet, wobei M größer als oder gleich vier und unter Berücksichtigung des Wertes der Anzahl N₀ und der Anzahl N₁ ausgewählt ist,
- eine Steuereinheit (UC), die konfiguriert ist, um die M Schalter der Schaltschnittstelle (ISW) zu steuern, um jeden Anschluss (A, B, C) der Kraftflusssteuervorrichtung mit einem einzelnen Anschluss des Systems zu verbinden und um auf einen Funktionszustand des Netzes zu reagieren.

2. System nach Anspruch 1, **dadurch gekennzeichnet, dass** die Schaltschnittstelle neun Schalter beinhaltet, die in drei Gruppen aus drei verteilt sind, einer ersten Gruppe aus drei Schaltern, die Folgendes beinhaltet:
- einen ersten Schalter (S_{0A}), der in Reihe auf einer Verbindung verbunden ist, die den ersten Anschluss des Systems mit dem ersten Anschluss der Kraftflusssteuervorrichtung verbindet,
- einen zweiten Schalter (S_{0B}), der in Reihe auf einer Verbindung verbunden ist, die den ersten Anschluss des Systems mit dem zweiten Anschluss der Kraftflusssteuervorrichtung verbindet, und
- einen dritten Schalter (S_{0C}), der in Reihe auf einer Verbindung verbunden ist, die den ersten Anschluss des Systems mit dem dritten Anschluss der Kraftflusssteuervorrichtung verbindet,
einer zweiten Gruppe aus drei Schaltern, die Folgendes beinhaltet:
- einen ersten Schalter (S_{1A}), der in Reihe auf einer Verbindung verbunden ist, die den zweiten Anschluss des Systems mit dem ersten Anschluss der Kraftflusssteuervorrichtung verbindet,
- einen zweiten Schalter (S_{1B}), der in Reihe auf einer Verbindung verbunden ist, die den zweiten Anschluss des Systems mit dem zweiten Anschluss der Kraftflusssteuervorrichtung verbindet, und
- einen dritten Schalter (S_{1C}), der in Reihe auf einer Verbindung verbunden ist, die den zweiten Anschluss des Systems mit dem dritten Anschluss der Kraftflusssteuervorrichtung verbindet,
einer dritten Gruppe aus drei Schaltern, die Folgendes beinhaltet:
- einen ersten Schalter (S_{2A}), der in Reihe auf einer Verbindung verbunden ist, die den dritten Anschluss des Systems mit dem ersten Anschluss der Kraftflusssteuervorrichtung verbindet,
- einen zweiten Schalter (S_{2B}), der in Reihe auf einer Verbindung verbunden ist, die den dritten Anschluss des Systems mit dem zweiten Anschluss der Kraftflusssteuervorrichtung verbindet, und
- einen dritten Schalter (S_{2C}), der in Reihe auf einer Verbindung verbunden ist, die den dritten Anschluss des Systems mit dem dritten Anschluss der Kraftflusssteuervorrichtung verbindet.

3. System nach Anspruch 1 oder 2, **dadurch gekennzeichnet, dass** die Schaltschnittstelle konfiguriert und gesteuert ist, um der Kraftflusssteuervorrichtung zu ermöglichen, sich mit zumindest drei Anschlüssen des Systems gemäß zumindest zwei einzelnen Verbindungskonfigurationen zu verbinden, wobei eine Verbindungskonfiguration durch die direkte Verbindung jedes Anschlusses des Systems mit einem einzigen Anschluss der Vorrichtung definiert ist.

4. System nach Anspruch 3, **dadurch gekennzeichnet, dass** die Schaltschnittstelle konfiguriert und gesteuert ist, um der Kraftflusssteuervorrichtung zu ermöglichen, sich mit zumindest drei Anschlüssen des Systems gemäß höchstens sechs einzelnen Verbindungskonfigurationen zu verbinden.

5. System nach einem der Ansprüche 1 bis 4, **dadurch gekennzeichnet, dass** die Kraftflusssteuervorrichtung eine Schaltbaugruppe beinhaltet, in der alle Schalter vom elektronischen Typ sind.

6. System nach einem der Ansprüche 1 bis 5, **dadurch gekennzeichnet, dass** die Schalter der Schaltschnittstelle alle vom mechanischen oder elektromechanischen Typ sind.

7. System nach einem der Ansprüche 1 bis 6, **dadurch gekennzeichnet, dass** das Netz in der Lage ist, gemäß einer Anzahl Nₘₐₓ an Funktionszuständen gleich zwölf zu funktionieren.

8. Verfahren zum Steuern eines Systems wie in einem der Ansprüche 1 bis 6 definiert, um eine Neukonfiguration der Kraftflusssteuervorrichtung umzusetzen, damit sie von einer anfänglichen Verbindungskonfiguration, die ermöglicht, auf einen ersten Funktionszustand des Netzes zu antworten, zu einer anderen, finalen Verbindungskonfiguration übergeht, um auf einen zweiten Funktionszustand des Netzes zu reagieren, wobei eine Verbindungskonfiguration durch die direkte Verbindung jedes Anschlusses des Systems mit einem einzigen Anschluss der Vorrichtung definiert ist, wobei das Verfahren **dadurch gekennzeichnet ist, dass** es die folgenden Schritte beinhaltet:
- Anwendung eines ersten Tastverhältnisses auf die Kraftflusssteuervorrichtung, um die Spannung von zumindest einer ihrer Spannungsquellen zu annullieren,
- Schließung der Schalter der Schaltschnittstelle, wodurch ermöglicht wird, die finale Verbindungskonfiguration herzustellen,
- Anwendung eines zweiten Tastverhältnisses auf die Kraftflusssteuervorrichtung, um die Spannung von zumindest einer ihrer Spannungsquellen zu annullieren,
- Öffnung der Schalter der Schaltschnittstelle entsprechend der anfänglichen Verbindungskonfiguration,
- Anwendung eines dritten Tastverhältnisses auf die Kraftflusssteuervorrichtung, um die gewünschte Verteilung der Ströme in der Masche zu erhalten.

9. Verfahren nach Anspruch 8, **dadurch gekennzeichnet, dass** in dem ersten Schritt der Anwendung des Tastverhältnisses dieses gleich 0 oder 1 gemäß dem ersten Funktionszustand des Netzes fest ist.

10. Verfahren nach Anspruch 8 oder 9, **dadurch gekennzeichnet, dass** in dem zweiten Schritt der Anwendung des Tastverhältnisses dieses gleich 0 oder 1 gemäß dem zweiten finalen Funktionszustand des Netzes fest ist.

## Claims

1. System for use in a direct-current meshed network comprising at least one mesh having at least one node between a first link, a second link and a third link, said network being capable of operating according to a number N₁ of operational states, each operational state of the network being defined on the basis of the sign of the electric current present in the first link, the sign of the electric current present in the second link, the sign of the electric current present in the third link and a voltage present between two of the links of the mesh, said system comprising:
- A power flow control device comprising a first terminal (A), a second terminal (B) and a third terminal (C), said device comprising at least one controlled voltage source connected between two of its terminals, said controlled voltage source of the power flow control device having an intrinsic topology arranged to respond to a number N₀ of operational states of the network, N₀ being greater than or equal to 1 and less than N₁, said system being **characterised in that** it comprises:
- A first terminal to be connected to the first link, a second terminal to be connected to the second link and a third terminal to be connected to the third link,
- A switching interface (ISW) interposed between said terminals of the system and said terminals of the device, said switching interface (ISW) comprising a number M of switches, M being greater than or equal to four and chosen taking into account the values of said number N₀ and said number N₁,
- A control unit (UC) configured to control the M switches of said switching interface (ISW) in order to connect each terminal (A, B, C) of said power flow control device to a separate terminal of the system and to respond to an operational state of the network.

2. System according to claim 1, **characterised in that** the switching interface comprises nine switches, divided into three groups of three, a first group of three switches comprising:
- a first switch (S_{0A}) connected in series on a link connecting the first terminal of the system to the first terminal of the power flow control device,
- a second switch (S_{0B}) connected in series on a link connecting the first terminal of the system to the second terminal of the power flow control device, and
- a third switch (Soc) connected in series on a link connecting the first terminal of the system to the third terminal of the power flow control device,
a second group of three switches comprising:
- a first switch (S_{1A}) connected in series on a link connecting the second terminal of the system to the first terminal of the power flow control device,
- a second switch (S_{1B}) connected in series on a link connecting the second terminal of the system to the second terminal of the power flow control device, and
- a third switch (S_{1C}) connected in series on a link connecting the second terminal of the system to the third terminal of the power flow control device,
a third group of three switches comprising:
- a first switch (S_{2A}) connected in series on a link connecting the third terminal of the system to the first terminal of the power flow control device,
- a second switch (S_{2B}) connected in series on a link connecting the third terminal of the system to the second terminal of the power flow control device, and
- a third switch (S_{2C}) connected in series on a link connecting the third terminal of the system to the third terminal of the power flow control device.

3. System according to claim 1 or 2, **characterised in that** the switching interface is configured and controlled to enable the power flow control device to connect to the three terminals of the system in at least two distinct connection configurations, a connection configuration being defined by the direct connection of each terminal of the system to a single terminal of the device.

4. System according to claim 3, **characterised in that** the switching interface is configured and controlled to enable the power flow control device to connect to the three terminals of the system in at most six distinct connection configurations.

5. System according to any one of claims 1 to 4, **characterised in that** the power flow control device comprises a switching assembly in which all the switches are of the electronic type.

6. System according to any one of claims 1 to 5, **characterised in that** the switches of the switching interface are all of the mechanical or electromechanical type.

7. System according to any one of claims 1 to 6, **characterised in that** the network is capable of operating according to a number Nₘₐₓ of operational states equal to twelve.

8. Method for controlling a system as defined in any one of claims 1 to 6, in order to effect a reconfiguration of the power flow control device from an initial connection configuration for responding to a first operational state of the network to a different final connection configuration for responding to a second operational state of the network, a connection configuration being defined by the direct connection of each terminal of the system to a single terminal of the device, said method being **characterised in that** it comprises the following steps:
- Application of a first duty cycle to the power flow control device in order to cancel the voltage of at least one of its voltage sources,
- Closure of the switches of the switching interface in order to allow the final connection configuration to be established,
- Application of a second duty cycle to the power flow control device in order to cancel the voltage of at least one of its voltage sources,
- Opening of the switches of the switching interface, corresponding to the initial connection configuration,
- Application of a third duty cycle to the power flow control device in order to obtain the desired distribution of currents in the mesh.

9. Method according to claim 8, **characterised in that**, in the first step of application of the duty cycle, the duty cycle is set equal to 0 or 1 depending on the first operational state of the network.

10. Method according to claim 8 or 9, **characterised in that**, in the second step of application of the duty cycle, the duty cycle is set equal to 0 or 1 depending on the second final operational state of the network.
